(19) **Europäisches Patentamt**
**European Patent Office**
**Office européen des brevets**

(11) **EP 3 975 157 B1**

(12) **EUROPEAN PATENT SPECIFICATION**

(45) Date of publication and mention
of the grant of the patent:
**27.11.2024 Bulletin 2024/48**

(51) International Patent Classification (IPC):
**G08G 5/00** *(2006.01)* **G08G 5/04** *(2006.01)*

(21) Application number: **20198491.1**

(22) Date of filing: **25.09.2020**

(52) Cooperative Patent Classification (CPC):
**G08G 5/0039; G08G 5/0008; G08G 5/0021;
G08G 5/0069; G08G 5/0078; G08G 5/045**

(54) **METHOD TO NAVIGATE AN UNMANNED AERIAL VEHICLE TO AVOID COLLISIONS**

VERFAHREN ZUR NAVIGATION EINES UNBEMANNTEN LUFTFAHRZEUGS ZUR VERMEIDUNG
VON KOLLISIONEN

PROCÉDÉ DE NAVIGATION D'UN AÉRONEF SANS PILOTE POUR ÉVITER LES COLLISIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.03.2022 Bulletin 2022/13**

(73) Proprietor: **RUAG Schweiz AG
6032 Emmen (CH)**

(72) Inventors:
• **AMBÜHL, Daniel
6043 Adigenswil (CH)**
• **HOHL, Christian
8406 Winterthur (CH)**

• **BOHL, Daniel
6020 Emmenbrücke (CH)**
• **Rudin, Konrad
8052 Zürich (CH)**

(74) Representative: **Keller Schneider
Patent- und Markenanwälte AG
Eigerstrasse 2
Postfach
3000 Bern 14 (CH)**

(56) References cited:
**EP-A1- 3 276 440    EP-A1- 3 640 921
US-A1- 2007 210 953    US-A1- 2010 292 871
US-A1- 2019 088 146**

## Description

### Technical Field

The invention relates to a method to navigate an unmanned aerial vehicle to avoid collisions. It further relates to an unmanned aerial vehicle.

### Background Art

The number of unmanned aerial vehicles (UAV) is steeply increasing. Measures need to be taken in order to avoid collisions and disruptions of the air traffic. They include support measures for the pilot of the UAV situated in a ground control station but also the provision of autonomous detect and avoid (also called sense and avoid) capabilities to the UAV itself, which work even if the link between the UAV and the ground control station is (temporarily) broken.

Detect and avoid systems include cooperative detect and avoid (CDA) systems, based on actively emitted signals by the cooperative systems (e. g. transponder, FLARM, ADS-B out) situated on other aircraft, as well as non-cooperative detect and avoid (NCDA) systems, allowing for the detection of aircraft (and other airborne objects) that do not actively emit signals from cooperative systems.

EP 2 187 371 B1 (Saab AB) relates to collision avoidance systems and in particular to the determination of escape maneuvers in such systems. It is especially suitable for aerial vehicles with low maneuverability. A corresponding system receives navigational data regarding an intruding aerial vehicle and the own aircraft. A plurality of pre-simulated escape trajectories are stored, and at least a subset thereof is compared with a presumed trajectory of the intruding aerial vehicle in order to select one of the pre-simulated escape trajectories.

GB 2 450 987 B (EADS Deutschland GmbH) relates to a detect and avoid system using available on-board sensors (such as TCAS, radar, IR sensors and optical sensors) in order to make for itself an image of the surrounding airspace. The situation thus established is analyzed for imminent conflicts, i. e. collisions, TCAS violations or airspace violations. If a problem is detected, a hierarchical search for avoidance options is started, wherein the avoidance routes as far as possible comply with statutory air traffic regulations. In a first step of the hierarchical search it is decided whether there is enough time to calculate and implement a planned avoidance maneuver. If not, a reactive avoidance maneuver is immediately implemented. In the first case, a planning algorithm is started, based on an A* path-searching algorithm, searching typically in this order for a horizontal 2d path to the right, a vertical 2d path up or down, a 3d path up to the right or down to the right, a horizontal 2d path to the left or a full 3d path, the respective paths being combinations of small path sections (motion primitives, motion segments) in various combinations. In the second case, the reactive algorithm generates a simple banking maneuver flying the aircraft out of the danger zone.

However, the reactive avoidance maneuver meets its limits if several intruders need to be avoided.

EP 3 640 921 A1 (Aurora Flight Sciences Corp) relates to the field of flight control systems, more specifically a system, method and apparatus for detecting and automatically navigating a vehicle around obstacles including other flying vehicles. The adaptive detection and avoidance system for use in an aircraft includes a processor connected to a flight controller and a memory device, the memory device having one or more databases of flight conditions for the aircraft. Further, the detection and avoidance system comprises a plurality of sensors associated with the aircraft, each sensor adapted to generate sensor data indicative of a position of an obstacle in the environment. Further, the detection and avoidance system comprises obstacle detection circuitry connected to the processor and the plurality of sensors configured to identify obstacles in the environment and generate obstacle information indicative of the best estimate of the position of the obstacle in the environment. Further, the detection and avoidance system comprises avoidance trajectory circuitry connected to the processor and the obstacle detection circuitry configured to (i) compute trajectory data as a function of the obstacle information and information from the one or more databases, and (ii) communicate the trajectory data to the flight controller. The aircraft control system includes a wireline transceiver for communicating with a remote device of a base station. The remote device may issue visual and audio alerts to alert the pilot to a specific alert. In doing so, the base station avoidance trajectory circuitry may send avoidance manoeuvre information. In operation, the detection and prevention system strives to detect cooperative and/or non-cooperative obstacles and command an automatic avoidance manoeuvre to avoid collision with the obstacle(s).

### Summary of the invention

It is the object of the invention to create a method to navigate an unmanned aerial vehicle that reliably avoids collisions even in complex situations.

The solution of the invention is specified by the features of claim 1. The invention relates also to a UAV according to claim 14. Preferred embodiments of the method are further claimed in the dependent claims 2-13.

Accordingly, the flight path is usually controlled by the remote operator (located e. g. in a ground control center).

In particular, the remote operator provides flight path information (e. g. relating to the desired course, altitude and speed) to the flight controller on board the UAV, and the flight controller controls the UAV based on the received information until updated information is received. In exceptional cases (e. g. when the link to the ground control center is lost) the flight path may be controlled by a higher level logic on-board the UAV.

As soon as at least one of the aerial vehicles is assigned the resolution advisory level, a message is provided to the remote operator including a first proposed viable avoidance trajectory, that ensures in particular that the UAV remains well clear from the aerial vehicles. The information on the avoidance trajectory may include in particular course, altitude and airspeed data to be commanded by the operator. As soon as at least one of the aerial vehicles is assigned the automatic avoidance level, control signals will be automatically provided to the flight controller in order to initiate an avoidance maneuver. This works even in cases where a communication link between the remote operator and the UAV is temporarily lost. As soon as predetermined criteria are met (e. g. the critical situation requiring automatic avoidance is resolved or the remote operator has explicitly disabled the automatic avoidance) the flight path will again be controlled by the flight controller that can be commanded by the remote operator.

For the assignment of threat levels, the relative horizontal and vertical distances between the UAV and the other aerial vehicles as well as their corresponding rates may be taken into account. As an alternative or in addition, the expected trajectories of the other aerial vehicles may be determined and compared to the expected trajectory of the own UAV, taking into account uncertainties as well as measurement and prediction errors.

In particular, the resolution advisory level is assigned if there is the danger of violating a "remain well clear" threshold with respect to one of the other aerial vehicles. The automatic avoidance level is assigned if there is an urgent need for measures in order to avoid a mid-air collision with another aerial vehicle.

Preferably, the automatic determination of avoidance trajectories is done by on-board means and on-board data such that it is not dependent from communication links to a remote entity such as a ground control center. The trajectories are continuously determined, i. e. even in cases where none of the other aerial vehicles is assigned resolution advisory or automatic avoidance level, respectively. No triggering is required to initiate the search for avoidance trajectories, and the avoidance trajectories will be readily available as soon as another aerial vehicle is assigned the resolution advisory or automatic avoidance level. The avoidance trajectories are regularly updated, based on the flight information for the own UAV as well as on the recognized air picture of the observation space.

Other aerial vehicles that do not bear the risk of collisions or "well clear" infringements may be assigned a corresponding threat level, e. g. "other traffic" (OT). Basically, it is possible to introduce further threat levels. As an example, one, several or all of the following additional threat levels may be assigned in addition to RA and AA:

i) OT: Other Traffic - the object is far away, and there is no need for action;

ii) PT: Proximate Traffic - the object is within a certain volume surrounding the UAV but poses no danger, there is no need for action;

iii) TA: Traffic Advisory - the object is in a critical volume surrounding the UAV, an alert is issued to the (ground) operator.

Avoidance trajectories are viable if they avoid collisions with other aerial vehicles. Further criteria may apply, e. g. with respect to collisions with terrain or with respect to physical limitations to the flight path. Usually, more than one avoidance trajectory will be viable, such that there is a degree of freedom in choosing one of the viable trajectories as the first proposed viable avoidance trajectory and the second proposed viable avoidance trajectory, respectively.

The first proposed viable avoidance trajectory may be identical with the second proposed viable avoidance trajectory or they may be different. In the latter case, the second proposed viable avoidance trajectory may have been selected from the same set of candidate avoidance trajectories as the first proposed viable avoidance trajectory or from a different set. This different set may take into account different behavior of the flight controller regarding performance characteristics as well as different delays between commands for automatic avoidance or commands from the operator. These delays may, among others, include pilot reaction time as well as link delays.

Various environment sensors may be employed, including receivers for signals broadcasted by transmitters of cooperative systems on board other aircraft (e. g. ADS-B or FLARM) or signals received by the interrogation of transponders of cooperative systems on board other aircraft (e. g. TAS or TCAS), radar sensors, LIDAR sensors, optical sensors, etc. Having onboard sensors ensures that the UAV is able to obtain a recognized air picture even in cases where the link to the remote operator or other entities is (temporarily) lost. Nevertheless, if available, data from those entities may be processed to obtain a comprehensive recognized air picture.

Further data may be processed, e. g. in order to assign the threat levels and/or in order to determine avoidance trajectories, such as terrain data from a database providing a digital terrain model.

The first, second and third processor may be implemented in various ways. They may be separate hardware components or different modules running on the same physical processor.

The present invention is applicable to both cooperative detect and avoid (CDA) systems as well as non-cooperative detect and avoid (NCDA) systems.

As long as possible, the remote operator will be able to control the flight path. Based on the message relating to one or several vehicles being assigned the resolution advisory level the operator should act to avoid collisions.

Only in a second step, the operator's controls may be overridden. This applies not only to cases where the operator fails to resolve the situation but e. g. also to cases where the link between the operator and the UAV is lost. Furthermore, for automatic avoidance the delay introduced by the exchange of data between the UAV and the operator is unimportant.

The first proposed viable avoidance trajectory and the second proposed viable avoidance trajectory may be determined independently from each other. This means that the first proposed viable avoidance trajectory and the second proposed viable avoidance trajectory may be different from each other. In particular, they may be different from each other in certain cases but coincide in other cases. This allows for taking into account differing conditions when providing advice to an operator compared to automatically commanding the UAV as well as differing goals such as ensuring "remain well clear" versus taking immediate action for avoiding a mid-air collision. The differing conditions may relate inter alia to different limitations with respect to performance of the UAV (maximum angle of roll, maximum rate of descent) in the different avoidance trajectories for manual and automatic avoidance maneuvers. Furthermore, a reaction time up to the first change of trajectory may be different, e. g. essentially 0 for automatic avoidance compared to the sum of pilot reaction time and link delay for manual avoidance.

Basically, the determinations of the first and the second proposed viable avoidance trajectory may be completely independent, or an intermediate result (e. g. a generated set of candidate avoidance trajectories) may be common for both determinations.

Preferably, the first proposed viable avoidance trajectory and the second proposed viable avoidance trajectory are continuously determined in parallel. This means that at least in a certain operation state of the system both kinds of avoidance trajectories are determined, such that they are readily available when one of the aerial vehicles is assigned the RA or AA level. Accordingly, the first proposed viable avoidance trajectory and the second proposed viable avoidance trajectory are determined even in cases where none of the aerial vehicles is assigned the resolution advisory level or the automatic avoidance level.

In systems where the threat level of an aerial vehicle changes only between neighboring levels (i. e. as an example, there is no jump from OT to AA) it is not required that in all operation states of the system both the trajectories for an avoidance recommendation as well as for automatic avoidance are determined, but the determinations may be controlled as follows:

| state | recognized air picture | determined trajectories | |
|---|---|---|---|
| | | for RA | for AA |
| I | no aerial vehicles with TA, RA, AA | no | no |
| II | at least one aerial vehicle with TA; no RA, AA | yes | no |
| III | at least one aerial vehicle with RA or AA | yes | yes |

Accordingly, the system has three operation states with respect to the determination of avoidance trajectories.

As a matter of course, the situation may be simplified by integrating two or three of the operation states, e. g. as follows:

| state | recognized air picture | determined trajectories | |
|---|---|---|---|
| | | for RA | for AA |
| I | no aerial vehicles with TA, RA, AA | no | no |
| II | at least one aerial vehicle with TA, RA or AA | yes | yes |

or as follows:

| state | recognized air picture | determined trajectories | |
|---|---|---|---|
| | | for RA | for AA |
| I | no aerial vehicles with RA, AA | yes | no |
| II | at least one aerial vehicle with RA or AA | yes | yes |

In the simplest embodiment, there is just one operation state and both the trajectories for RA as well as for AA are always determined. This ensures that the trajectories are always available even in embodiments where jumps between non-neighboring levels are possible.

The first proposed viable avoidance trajectory and the second proposed viable avoidance trajectory may be determined simultaneously, i. e. at the same time. This may be achieved e. g. by using parallel computing techniques.

Alternatively, the first proposed viable avoidance trajectory and the second proposed viable avoidance trajectory are determined by turns. This means that the determination of a first proposed viable avoidance trajectory (A) and the determination of a second proposed viable avoidance trajectory (B) happen one after the other, such that the computing power that has to be provided may be reduced. The computations may be effected alternately (ABABAB...) or in other sequences (e. g. ABBABBABB... or ABBBABBBABBBB...). It is not required that the sequence is constant, in particular it may depend from the presently assigned threat levels. Certain intermediate results of the determination of one of the viable avoidance trajectories may be used for the determination of the other viable avoidance trajectory.

Preferably, for determining the viable avoidance trajectories a set of candidate avoidance trajectories are generated according to a predetermined pattern and are assessed with respect to collision avoidance (with airborne objects) and additional properties. The assessment will cover a defined prediction time exceeding the cycle time of the continuous determination of the viable avoidance trajectories.

Dealing with a fixed set of candidate avoidance trajectories ensures that the computing time for generating and assessing the candidate trajectories is manageable and predictable, which is important if the determination shall be repeated, in particular in predetermined intervals. This ensures that there is always updated data independent of e. g. the present complexity of the recognized air picture.

The avoidance trajectories may be influenced by external factors, e. g. by strong wind. This may be taken into account in different stages: Trajectories that are not physically possible due to the external factors may be ignored (e. g. by setting a corresponding flag). If the flight path resulting from certain commands may not be reliably predicted due to strong and changing wind, the check for collisions with terrain and/or traffic may be adapted, e. g. by increasing protection volumes or distances that shall be observed. Furthermore, external factors may lead to additional cost contributions for the selection of the best trajectory.

Information on external factors may be obtained by further on-board sensors and/or via a communication link. As an example, wind information may be obtained from the on-board navigation system and taken into account when assessing the candidate trajectories. With respect to wind, it has turned out that with larger UAVs a very simple wind model with constant direction and strength is usually sufficient.

Some of the candidate trajectories may be flagged as "not useable" at an early stage of the determination. This may be due to violations of the Rules of the Air (see further below) or if certain trajectories shall be excluded in a given situation, e. g. if trajectories that lead to a change of altitude shall only be allowable if the available horizontal positional data of relevant traffic is substantially less precise than vertical positional data.

Advantageously, the set of candidate trajectories comprises trajectories starting at a current position and with a determined velocity including up to two changes of direction in a predetermined temporal offset and up to one change in altitude. This ensures that only a limited number of candidate trajectories need to be assessed. Furthermore, it has turned out that this set of candidate trajectories provides sufficient degrees of freedom to ensure that collisions can be avoided, in the RA as well as the AA phase.

As an example, the set of candidate trajectories for the evasion of airborne objects may be defined as follows:

i. the present speed is maintained (temporary speed changes for climbing or descending only) or reduced to minimum speed;

ii. the possible courses are quantized by 30°, up to a maximum change of 60° (0 / ±30 / ±60° with respect to the present course), 3 segments (2 changes with a predetermined temporal offset);

iii. three altitudes (present altitude, lower altitude, higher altitude), only one change.

This leads to 2x5x5x3 = 150 candidate trajectories.

In particular, the reduction of the speed of the UAV to minimum speed is reasonable if the UAV is close to terrain. Accordingly, in order to save computational resources the 75 candidate trajectories with reduced speed may be selectively taken into account only if potential conflicts with terrain are relevant for the determination of the viable avoidance trajectories. In a particular embodiment, maintenance of the present speed is assumed until at least one of the candidate trajectories conflicts with terrain. In this case, the speed for the candidate avoidance trajectories is switched to minimum speed until none of the candidate trajectories conflicts with terrain. In this case, the speed for the candidate avoidance trajectories is switched back to the present speed. In this manner, in every time step only 75 candidate trajectories are taken into account. The time up to the first change may be variable and differ for candidate trajectories for finding the first proposed viable avoidance trajectory and the second proposed viable avoidance trajectory. As an example, this time may be 0 for an initial segment of automatic avoidance and having a fixed value (off-time) for further segments in order to avoid too frequent changes. In contrast, the time may correspond to the sum of the pilot reaction time and the link delay time for segments of resolution advisory trajectories. Preferably, the value of the offset between the two changes of course is fixed.

As mentioned above, the sets of candidate trajectories may be the same for finding the first proposed viable avoidance trajectory and the second proposed viable avoidance trajectory or they may be different from each other.

In other embodiments, the set of candidate trajectories may be further restricted or include further candidates. In particular, the limitation to a single change in altitude is not mandatory. Candidate trajectories including two or more changes may be assessed, in particular if the system exchanges data with other aircraft according to the TCAS II protocol.

Preferably, the additional properties for assessing the candidate avoidance trajectories include an avoidance of terrain. This ensures that not only collisions with other airborne objects are avoided but also flights into terrain - not only with respect to the present flight parameters according to the flight path but also - and in particular - with respect to the advised or commanded avoidance maneuvers.

Advantageously, for this purpose, a terrain model is stored locally on the UAV such that automatic avoidance is ensured even when the link to the operator, the ground control system or another entity providing terrain data is lost.

Preferably, in a first step the candidate avoidance trajectories are assessed with respect to the avoidance of terrain, excluding candidate trajectories that are inferior with respect to the avoidance of terrain. In a subsequent second step remaining candidate trajectories are assessed with respect to avoiding collisions with other traffic.

In particular, all candidate trajectories are assessed in the second step that ensure a certain minimum distance from terrain. If none of the candidate trajectories ensures this minimum distance, the trajectory or trajectories with the maximum distance will be further assessed.

Advantageously, in the second step a compliance value is evaluated for each of the remaining candidate trajectories, the compliance value including a term depending from a minimum distance of the UAV navigated according to the respective candidate trajectory from the aerial vehicles in the observation space. The minimum distance is not necessarily the only criterion, but further criteria may be relevant, e. g. whether the altitude of a relevant traffic is crossed during the avoidance maneuver or not.

In a preferred embodiment, the additional properties for assessing the candidate avoidance trajectories include a first similarity of a respective of the candidate avoidance trajectories with a trajectory of the UAV commanded by the remote operator or a higher level logic, wherein candidate trajectories having a high first similarity are favored over candidate trajectories having a lower first similarity. There is a corresponding choice if there is more than one candidate trajectory that is considered to avoid collisions. It may apply to RA as well as to AA or only to one of these levels.

In particular, the trajectory is commanded based on provided reference values by generating respective control signals for the flight controller of the UAV. The higher level logic may be constituted in particular by an on-board system for commanding automatic maneuvers (such as "return home", etc.), e. g. if the link to the base station is lost. This higher level logic thus provides the reference values in exceptional circumstances, instead of the remote operator.

The avoidance algorithm thus receives and processes the commands of the remote operator or the higher level logic in real time, directly or from the flight controller that receives these commands. This information is processed even during an evasive maneuver.

Favoring trajectories with a high similarity with the commanded trajectory ensures that the impact of the avoidance maneuver to the flight path is minimized. In most cases, even with respect to automatic avoidance, the remote operator or the higher level logic still has the opportunity to affect the flight path as the respective commands are taken into account when selecting the avoidance trajectory to be proposed or commanded, within a solution space that fulfills the avoidance criteria. Even when an automatic avoidance maneuver is in progress, commands of the operator or the higher level logic will still be taken into account as long as there is a degree of freedom with respect to choosing the flight path. Accordingly, the operator's or higher level logic's commands are not just overridden if certain criteria are met, but in most cases the overriding effect of the avoidance measures is perceived by the operator or higher level logic as setting in gradually. Similarly, the return of the full control to the operator or higher level logic in the final stage of an avoidance maneuver is happening gradually as well.

Preferably, in order to favour candidate avoidance trajectories bearing a high level of similarity with the trajectory commanded by the remote operator or the higher level logic the compliance value includes an additional term depending from the first similarity. This allows for systematically including the assessment of the first similarity when choosing the proposed viable avoidance trajectory.

In other embodiments, the commands of the remote operator are not taken into account during an evasive maneuver. The operator regains control as soon as the evasive maneuver has been completed.

The preference for avoidance trajectories that match the commanded flight path is advantageous even if no resolution advisory level is assigned and/or if the viable avoidance trajectories are not continuously automatically determined. Accordingly, a method to navigate a UAV comprising the following steps has its own merits:

a) controlling a flight path of the UAV by a remote operator;

b) obtaining a recognized air picture of an observation space surrounding the UAV, including tracking information with respect to aerial vehicles within the observation space;

c) assigning one of a plurality of threat levels to each of the aerial vehicles, the threat levels comprising an automatic avoidance level;

d) if at least one of the aerial vehicles is assigned the automatic avoidance level, providing control signals to an on-board flight controller of the UAV instructing the vehicle to follow a flight path corresponding to a viable avoidance trajectory,

wherein for determining the avoidance trajectory a set of candidate avoidance trajectories are assessed with respect to collision avoidance and with respect to similarity of a respective of the candidate avoidance trajectories with a trajectory of the UAV commanded by the remote operator or a higher level logic, wherein candidate trajectories having a high similarity are favored over candidate trajectories having a lower similarity.

In this case, the avoidance trajectory may be continuously automatically determined, or it may be determined as soon as at least one of the aerial vehicles is assigned the automatic avoidance level or as soon as another suitable criterion is met.

Preferably, the additional properties for assessing the candidate avoidance trajectories include a second similarity of a respective of the candidate avoidance trajectories with a trajectory of the UAV according to present control signals provided to the flight controller, wherein candidate trajectories having a high second similarity are favored over candidate trajectories having a lower second similarity.

Therefore, trajectories are favoured that feature smaller (or no) changes in course or altitude. Accordingly, if several avoidance trajectories are available in principle, the one will be chosen that is most similar to the present course and altitude. This minimizes the deviation of the avoidance trajectory from the present path and avoids seesaw-type avoidance trajectories, in cases where successive back and forth changes of altitude and/or course lead to minimum costs for terrain and/or traffic avoidance.

Preferably, in order to favour candidate avoidance trajectories bearing a high level of similarity with the trajectory according to the present control signals provided to the flight controller, the compliance value includes an additional term depending from the second similarity. This allows for systematically including the assessment of the second similarity when choosing the proposed viable avoidance trajectory. In particular, the additional term includes components relating to changes in course as well as in altitude.

The respective weights of the different terms (cost terms) of the compliance value may be chosen to adjust the relative importance of the different criteria.

Several or all of the different cost terms may be assessed at once by calculating a compliance value including these cost terms. In contrast, several assessments may be conducted successively, wherein the number of remaining candidate avoidance trajectories is reduced step-by-step.

In a preferred embodiment, a first cost term is calculated for all the candidate trajectories, wherein the first cost term is related to the violation of a terrain protection volume.

Preferably, the value of the first cost term has a predetermined minimal value (e. g. 0) for all candidate trajectories that do not violate the terrain protection volume. In a subsequent step, a second cost term is calculated and assessed for all the candidate trajectories having the best value for the first cost term (ideally, several candidate trajectories do not violate the terrain protection volume and thus are assigned the minimal value for the first cost term). The second cost term includes elements relating to violations of the protection volume of traffic as well as optionally altitude crossings with traffic. A third cost term includes further elements relating to changes of the commands with respect to the present commands as well as to deviations of the control signals from the reference values for the flight path used by the flight controller, provided by the remote operator or higher level logic.

Preferably, at least some of the aerial vehicles in the observation space are classified according to a relative geometry of a respective track of the aerial vehicle and a flight path of the UAV.

Possible classes include:

- traffic approach is head on;

- traffic is being overtaken;

- other.

An interference is classified as "head on" if the approach of the object and the UAV is fully or nearly frontal, i. e. the object approaches the UAV from a frontal direction. An interference is classified as "traffic is being overtaken" if the UAV approaches a slower object from behind.

Further classes are possible, such as "traffic approach is overtaking", "converging" or "diverging".

Accordingly, it is preferred that the additional properties include a compliance of a respective candidate trajectory with Rules of the Air.

In particular, when issuing an avoidance recommendation, the Rules of the Air are incorporated in such a way that the pilot is advised to avoid a collision doing a right turn if an object is classified as "head on" or "being overtaken".

Preferably, for the determination of the first proposed viable avoidance trajectory the additional properties include the compliance of a respective candidate trajectory with Rules of the Air and for the determination of the second proposed viable avoidance trajectory the additional properties do not include the compliance of a respective candidate trajectory with Rules of the Air.

Accordingly, in this case the Rules of the Air are ignored when commanding an automatic avoidance maneuver, in order to ensure that a collision is reliably avoided even in the case of a close approach between the object and the UAV.

Other advantageous embodiments and combinations of features come out from the detailed description below and the entirety of the claims.

## Brief description of the drawings

The drawings used to explain the embodiments show:

Fig. 1 A schematic representation of a UAV according to the invention, communicating with a ground station and other aerial vehicles;

Fig. 2 a block diagram for describing the inventive process; and

Fig. 3 a flow chart for describing the process for generating avoidance trajectories.

In the figures, the same components are given the same reference symbols.

## Preferred embodiments

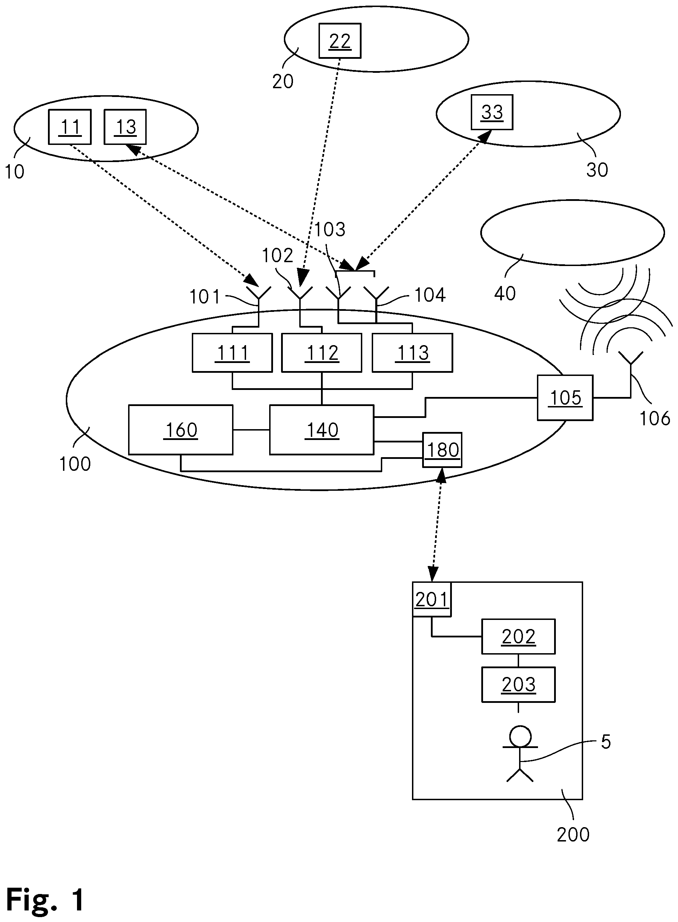

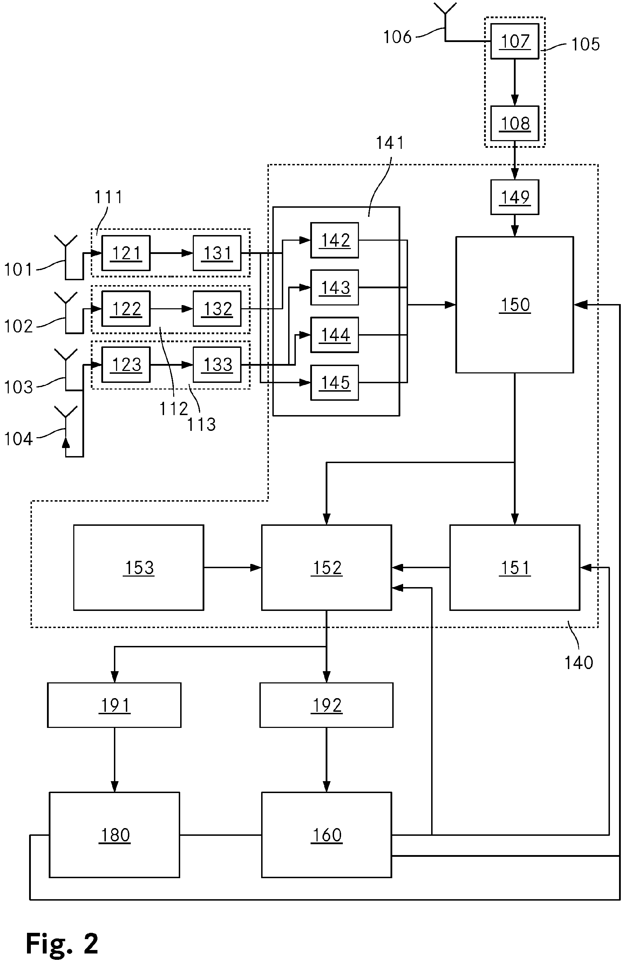

The Figure 1 is a schematic representation of a UAV according to the invention, communicating with a ground station and other aerial vehicles. The unmanned aerial vehicle (UAV, ownship) 100 features a number of antennas 101, 102, 103, 104 connected to several receiving units 111, 112, 113. As shown in Figure 2, the receiving units 111, 112, 113 comprise a receiver 121, 122, 123 to process the signals received by the respective antenna(s) 101, 102, 103, 104 as well as a decoder 131, 132, 133 for obtaining data from the respective signal.

The first receiving unit 111 processes ADS-B (Automatic dependent surveillance - broadcast) signals that are broadcasted by respective cooperative systems 11 of aerial vehicles 10 such as airliners or general aviation aircraft. Positional information (including GPS position and altitude) are included within the signals and provided by the decoder 131 for further processing.

The second receiving unit 112 processes FLARM signals broadcasted by respective cooperative systems 22 of aerial vehicles 20 such as gliders, power gliders, small airplanes, helicopters or ultralight (microlight) planes. Again, the signals are broadcasted and include positional information that is decoded and provided by the decoder 132.

The third receiving unit 113 processes signals received from cooperative systems 13, 33 of different kinds of aerial vehicles 10, 30 in the context of active transponder interrogation. Altitude information may be embedded within the received signals and decoded and provided by the decoder 133. Range information is derived in the decoder 133 from the time-of-flight between the active interrogation and the received signals. Bearing information is obtained from the signals received by several antennae 103, 104 (usually, more than two antennae, e. g. four antennae, will be arranged at the UAV 100 in a distance from each other), derived by the decoder 133.

The UAV 100 further comprises a radar system 105 with an antenna 106, which also allows for the detection of non-cooperating aerial vehicles 40. The signals from the radar system 105, comprising positional information including among others range, range rate, azimuth, and elevation, and optionally further information relating to velocities or tracks of the detected aerial vehicles, as well as the decoded and derived positional information from the receiving units 111, 112, 113 are transmitted to a processor 140. This data as well as further data received by a communication system 180 from a ground station 200 is further processed by the processor 140 to obtain a recognized air picture (described further below, in connection with Figure 2). The processor 140 is linked to a control system 160 for controlling the UAV 100. In a manner known as such, the control system 160 includes a flight system and a mission system, controlling the UAV's components such as drives, sensors, communication units etc.

Inter alia, the control system 160 is linked to the communication system 180 for communicating with the ground station 200. Again, the ground station 200 is known as such, therefore there is no need to provide a detailed description thereof. It includes a communication interface 201, a processor 202 connected to the interface for processing the incoming and outgoing data, a human-machine interface (HMI) 203 for displaying information (including flight information, maps, the recognized air picture, the status of all systems, etc.) to and for receiving inputs (including piloting instructions) from an operator 5.

The Figure 2 is a block diagram for describing the inventive process. For illustrative purposes and to provide a link to the system described in connection with Figure 1, some steps of the process are visualized by functional units of the inventive UAV. It is to be noted that this does not mean that the actual components of the UAV need to correspond to these functional units.

The signals received by the antennae 101, 102, 103, 104 are transmitted to the respective receiving units 111, 112, 113 for processing. Processing includes steps such as filtering of and demodulation of the signals, done by receivers 121, 122, 123 as well as obtaining the signal content including positional information, identification numbers or codes, time or signal quality information etc., done by decoders 131, 132, 133. Further signals are received by several antennae 103, 104 in the context of active transponder interrogation. Range and bearing are derived from the signals as described above, by the corresponding decoder 133.

The information relating to positions (and possibly further motional quantities such as velocities) of other aerial vehicles is checked to fall within general pre-determined limits. These checks apply in particular to range, altitude and ground speed. The thus verified data is continuously fed to a filtering module 141, where the tracks are obtained and monitored by several filters 142, 143, 144, 145, as described in the following. The filters are implemented as extended I<alman filters, based on different models for the actual movement of the related objects, depending on the tracked quantities and the available data.

The radar signals are transmitted and received by transceiver 107 using antenna 106. The received signals are decoded and processed by decoder 108 to obtain track information containing among others range, range rate, azimuth, and elevation.

2-dimensional horizontal positional information from ADS-B and FLARM received from the receiving units 111, 112 is processed using a 2-dimensional coordinated turn model in filter 142. If 2-dimensional horizontal positional information is obtained from active transponder interrogation, based on the derived range, bearing and relative altitude provided by the receiving unit 113 together with the attitude of the ownship, it is processed using a 2-dimensional continuous white noise acceleration model in filter 143. For this processing, the data provided by receiving unit 113 are transformed into bearing and range defined in a local horizontal plane, using the ownship's attitude and the relative altitude. The measurement uncertainties are similarly transformed in this local horizontal plane by means of the so-called debiased converted measurement filter method (Y. Bar-Shalom, P. K. Willett, X. Tian: "Tracking and Data Fusion - A Handbook of Algorithms", 2011). Using the 2-dimensional continuous white noise acceleration model instead of the coordinated turn model is due to the fact that information obtained from transponder interrogation is less precise than positional information obtained directly from the signals of the cooperative system as in the case of ADS-B and FLARM, and therefore it is not feasible to apply a coordinated turn model to such data.

Range information from active transponder interrogation is tracked by another filter 144, embodied as a continuous Wiener process acceleration model with a $3^{rd}$ order integrator.

Finally, altitude information obtained from any of the receiving units 111, 112, 113 is processed by a fourth filter 145 using a continuous white noise acceleration model with a $2^{nd}$ order integrator.

The altitude information obtained from cooperative systems is usually quantized. This is taken into account in the context of the I<alman filter as described in the following. The linear dynamics for the altitude of an aerial vehicle is described as

$$x(k+1) = Ax(k) + Bu(k),$$

$$y(k) = Cx(k).$$

Due to the quantization effects the following non-linear measurement equation holds:

$$z(k) = Q(y(k)),$$

where Q is the quantization operator, a rounding operation in the simplest case:

$$Q(y) = round(\tfrac{y}{\Delta}) \cdot \Delta.$$

The estimation error $e(k)$ of the filter is defined as follows:

$$e(k) = y(k) - y_p(k) = y(k) - Cx.$$

In order to take into account the quantization of the altitude information, the estimation error is quantized as well (cf. M. Fu: "Lack of Separation Principle for Quantized Linear Quadratic Gaussian Control", IEEE Transactions on Automatic Control, Vol. 57, Issue 9, Sept. 2012):

$$e^Q(k) = Q(e(k)) = Q\left(y(k) - (Cx(k))\right).$$

This quantized error $e^Q(k)$ is used in the correction step of the filter.

The data received by the receiving units 111, 112, 113 are assigned to different intruders, if available, the assignment is based on the transmitted ID. If an ID is not available or in more general cases a suitably defined Mahalanobis distance taking into account other or further parameters is employed for assignment.

The data obtained from decoder 108 of the radar system 105 is preprocessed by preprocessor 149, which applies the required coordinate transformations and/or filters the track information.

The data obtained from the relevant filters 142, 143, 144, 145 as well as from the preprocessor 149 is processed in a recognized air picture (RAP) module 150 together with the state vector of the UAV obtained from the control system 160. This module includes inter alia a database comprising the storage slots for the tracks, storing the track information relating to the respective trajectories, the assigned IDs, the criticality values and flags relating to the availability of 2-dimensional horizontal information as well as vertical information. Accordingly, the information stored in the database constitutes the recognized air picture with respect to cooperative aerial vehicles. It is continuously updated based on the data obtained from the signals received by the receiving units 111, 112, 113 as well as from the radar system 105 and from the ground station via the communication module 180.

Further input data for the recognized air picture (RAP) module 150 may be obtained from further sensors, including NCDA sensors such as LIDAR sensors, optical sensors, etc. as well as from other sources.

In order to assign the intruders to the available storage slots, a continuous criticality value r is calculated for the intruder, based in particular on positional data and velocity data of the respective intruder and the ownship. For that purpose, two threat indices, a horizontal index $r_{hor}$ and a vertical index $r_{vert}$ are calculated as described in the following: First of all, the minimal time up to a collision is calculated in horizontal ($\tau_{hor2D}$) and vertical ($\tau_{vert}$) direction as well as with respect to the range ($\tau_{range2D}$), where

$$\tau_{hor2D} = \frac{d_{hor2D}}{-\dot{d}_{hor2D}},$$

$$\tau_{vert} = \frac{d_{vert}}{-\dot{d}_{vert}},$$

$$\tau_{range2D} = \frac{d_{range2D}}{-\dot{d}_{range2D}},$$

where the values of $d$ denote the distance between the UAV and a given object and the values of $\dot{d}$ denote the rate of closure. The negative sign leads to the values being positive for approaching intruders.

The horizontal rate of closure is calculated as follows:

$$\dot{d}_{hor2D} = \frac{x_N^{rel} \cdot v_N^{rel} + x_E^{rel} \cdot v_E^{rel}}{d_{hor2D}}.$$

The values of $\tau$ are mapped to a range between 0 and 1 using piecewise affine functions as follows:

$$r_\tau(\tau) = \begin{cases} 1, & 0 \le \tau \le \tau_{min} \\ 1 - \dfrac{\tau - \tau_{min}}{\tau_{max} - \tau_{min}}, & \tau_{min} < \tau \le \tau_{max} \\ 0, & \tau \ge \tau_{max} \ or \ \tau < 0 \end{cases}$$

where the parameters $\tau_{min}$, $\tau_{max}$ are freely selected to tune the behavior of the mapping. A value of $\tau_{min} = 0$ leads to a high selectivity even at small values of $\tau$.

For each the horizontal and vertical direction as well as range, a second index is calculated based on the distance d mapped to the range between 0 and 1:

$$r_d(d) = \begin{cases} 1, & d \le d_{min} \\ 1 - \dfrac{d - d_{min}}{d_{max} - d_{min}}, & d_{min} < d \le d_{max} \\ 0, & d \ge d_{max} \end{cases}$$

Again, the parameters $d_{min}$, $d_{max}$ are freely selected to tune the behaviour of the mapping.

The pairs of indices are combined as follows to obtain the two threat indices mentioned above:

1. If track information for the range is available:

$$r_{hor} = \max(r_{d,range2D}, r_{\tau,range2D})$$

2. If no track information for the range is available but horizontal track information:

$$r_{hor} = \max(r_{d,hor2D}, r_{\tau,hor2D})$$

3. If neither range nor horizontal track information is available:

$$r_{hor} = 0.0$$

(this means that an intruder without range or horizontal information is irrelevant).

4. If vertical track information is available:

$$r_{vert} = \max(r_{d,vert}, r_{\tau,vert}),$$

5. If no vertical track information is available

$$r_{vert} = 1.0$$

(this means that an intruder without altitude information is considered to be critical).

The criticality value r is calculated as the geometric mean of the two indices:

$$r = \sqrt{r_{hor} \cdot r_{vert}}.$$

For each intruder it is checked whether essentially simultaneous information is obtained from more than one of the receivers, due to the fact that the corresponding aerial vehicle features more than one cooperative system (as for example aerial vehicle 10 featuring an ADS-B as well as a TAS transponder). If this is the case, the data of only one of the systems is used, chosen according to a predetermined priority. In the described example, ADS-B is preferred to FLARM and FLARM is preferred to active transponder interrogation.

Monitored tracks of intruders are stored in a fixed number of storage slots, where one track is assigned to one slot. If new data cannot be assigned to an existing track (e. g. because a corresponding ID is not among the IDs assigned to the existing tracks) it is checked whether a free slot is available. If this is the case, a new track is initialized with the data. If no slot is available, the criticality value of the intruder is compared with the criticality value of the existing tracks. If at least one of the existing tracks has a lower criticality value (corresponding to a lower risk of an incident) the one existing track with the lowest criticality value is deleted and the new track, initialized with the data, is stored in the corresponding storage slot. If none of the existing tracks has a lower criticality value, no new track is initialized and the data is discarded.

A maintenance function continually ensures that tracks that have not been updated for a predetermined time are automatically deleted, thereby freeing the corresponding storage slot.

To each of the detected objects, represented by their respective track, a threat level is assigned in classification module 151, based on the information obtained from the RAP module 150 as well as flight information of the ownship provided by the control system 160. In addition, all objects are classified according to the geometry of the interference with the UAV, comprising all relevant conditions of the ICAO Rules of the Air.

The threat levels are chosen in analogy to TCAS II, V7.1. In addition to the corresponding states a further level, Automatic Avoidance, is introduced. Accordingly, the threat levels are as follows:

    i) OT: Other Traffic - the object is far away, and there is no need for action;

    ii) PT: Proximate Traffic - the object is within a certain volume surrounding the UAV but poses no danger, there is no need for action;

    iii) TA: Traffic Advisory - the object is in a critical volume surrounding the UAV, an alert is issued to the (ground) operator;

    iv) RA: Resolution Advisory - the object is close, immediate action is required from the operator in order to resolve the conflict, for that purpose an avoidance recommendation message 191 is sent to the operator (cf. Figure 2);

    v) AA: Automatic Avoidance - the object is close and the flight controller is immediately provided with instructions 192 for starting an avoidance maneuver (cf. Figure 2).

The threat levels are characterized by the parameters $\tau$, a time up to the Closest Point of Approach (CPA), and DMOD, a minimum distance that needs to be respected besides a certain minimum value of $\tau$. In principle, the criteria on both parameters may be varied according to a Sensitivity Level (which may depend in particular from the altitude of the ownship). Alternatively, the criteria on the parameters may be fixed. Automatic Avoidance may be switched on or off, i. e. if it is switched off, the threat level will not be changed to AA and the operator is responsible for commanding all avoidance maneuvers. (In a variant, the threat level will still be changed to AA if it is established at the UAV that the link with the ground station is currently lost.)

For the classification of the traffic, in a first step the maximum distances of the Protection Volumes $d_{hor}^x, d_{ver}^x$ are calculated for each of the threat levels *x*. In a second step, based on the threat level determined in the previous time step, the limits of the lower and equal threat levels are increased, using a hysteresis parameter $Hyst_y^x$, where *y* denotes *hor* or *ver*:

$$d_y^x \cdot (1 + Hyst_y^x),$$

where the values of the hysteresis parameter $Hyst_y^x$ may be chosen in a range of $0 \leq Hyst_y^x < 1$. Setting a non-zero hysteresis parameter helps avoiding too many back-and-forth changes of the classification level. In principle, it increases the protection volume that shall not be violated if the threat level shall be reduced.

Finally, it is ensured that the threat level AA is maintained until the relevant intruder may be assigned to threat level PT. This is done by checking whether the threat level in the previous time step was AA. If this is the case, the limits of the threat level AA are set to the value of the threat level TA, such that a transition to threat level TA is prohibited.

As soon as the limits are known, the traffic is classified according to these limits into the highest possible threat level.

For the sake of classification, the "protection volumes", distances, velocities and finally the threat level are calculated for each of the tracked aerial vehicles. The threat level is calculated also in the case where the recognized air picture is incomplete. As a minimum, a horizontal range should be known to be able to determine the threat level. If no altitude information is available, the classification is based purely on the horizontal information. As soon as altitude information becomes available, the vertical criteria are considered as well.

The track information stored in the database of the RAP module 150 is provided with flags indicating the availability of different elements of the track information, such as horizontal range and its time derivative and relative altitude of the aerial vehicle and its time derivative. Horizontal range information is obtained from the range filter 144 (for transponder interrogation data) or from the horizontal filter 142 (for FLARM and ADS-B data), wherein slant range is converted to horizontal range, taking into account the relative altitude. If relative altitude information is not available it will be assumed that the aerial vehicle is on the same altitude as the UAV (worst case scenario).

As in the context of TCAS, the range parameter is modified in order to avoid small distances when the relative rate of closure is small. The relative rates of closure in the horizontal plane are obtained from the traffic filter:

$$d_{hor} = r$$

$$\dot{d}_{hor} = -\dot{r}$$

In the vertical direction, the relations are as follows:

$$x_{rel}^D(t) = x_{TFC}^D(t)$$

$$v_{rel}^D(t) = v_{TFC}^D(t) - v_{UAV}^D(t)$$

$$d_{ver} = \left| x_{rel}^D(t) \right|$$

$$\dot{d}_{ver} = -sgn\left(x_{rel}^D(t)\right) \cdot \dot{x}_{rel}^D(t) = -sgn(x_{rel}^D(t)) \cdot v_{rel}^D(t)$$

If no valid value for $v_{UAV}^D$ is available, e.g. due to a communication error, the last known velocity of the UAV is used.

The horizontal and vertical distance from the protection volume for RA (and analogously for TA and AA) are calculated as follows:

$$d_{hor}^{RA} = \max\left(DMOD^{RA}, \tau^{RA} \cdot \max(0, \dot{d}_{hor})\right),$$

$$d_{ver}^{RA} = \max\left(AltThr^{RA}, \tau^{RA} \max\left(0, \dot{d}_{ver}\right)\right),$$

where *AltThr* is the altitude threshold, corresponding to the DMOD for vertical approach. As an example, in the context of TCAS Sensitivity Level 3, the values for the parameters are

| threat level | $\tau$ | DMOD | AltThr |
|---|---|---|---|
| RA | 15s | 0.2 NM | 600 ft |
| TA | 25 s | 0.33 NM | 850 ft |

When classifying the aerial objects according to their threat levels it is considered whether the input data are complete. For that purpose it is assumed that the data of the traffic filter are accurate as long as a corresponding flag assigned to an object is set to "is Available". If an object is set to "not Available" the threat level of this object is set to OT.

In addition, a state vector of the UAV is employed. If the state vector has not been updated within a time interval or if its data is not valid the last known vertical velocity is used for the classification. If no useable information on the state vector is available all traffic is set to OT as a meaningful classification is not possible without knowledge of the current state of the UAV itself.

The classification of the objects according to the geometry of the interference with the UAV assigns every tracked aerial vehicle to one of three classes, namely

- traffic approach is head on;

- traffic is being overtaken;

- other.

An interference is classified as "head on" if the approach of the object and the UAV is fully or nearly frontal, i. e. the object approaches the UAV from a frontal direction. This is assumed if the following criteria are fulfilled:

i. the position of the object is within a circular segment defined by a predetermined angle, about the inertial velocity vector above ground of the UAV;

ii. the velocity vector of the object relative to the UAV above ground is within a further predetermined angle about a line connecting the UAV and the object;

iii. the course difference between the UAV and the object is more than 90° or less than -90°.

An interference is classified as "traffic is being overtaken" if the following criteria are fulfilled:

i. the position of the object is within a circular segment defined by a predetermined angle about the inertial velocity vector of the UAV;

ii. the velocity vector of the object relative to the UAV above ground is within a further predetermined angle about a line connecting the UAV and the object;

iii. the difference in course of the UAV and the object is less than 90° or more than -90°.

Other overtaking maneuvers may be designated as "left oblique overtaking" or "right oblique overtaking". They are not specifically handled in the context of the described system.

Further classes are possible, such as "traffic approach is overtaking", "converging" or "diverging").

For generating appropriate avoidance recommendation messages 191 as well as instructions 192 for automatic avoidance maneuvers the data obtained by the RAP module 150 as well as from the classification module 151, as well as data on the UAV and further data received from further sources such as a terrain model 153 and the control system 160 are processed by a generation module 152 for generating avoidance trajectories.

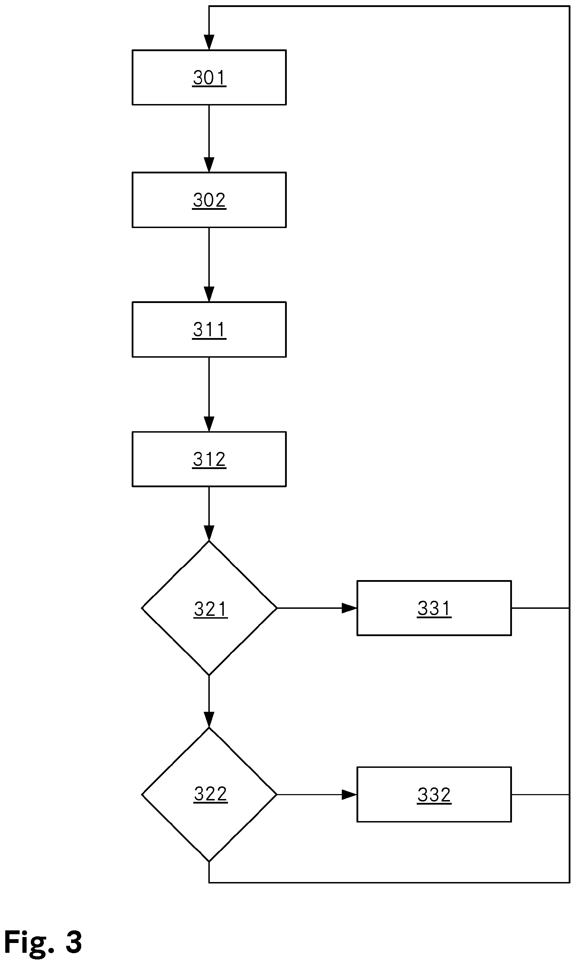

The general steps of the respective process are shown in the flow chart of Figure 3. After obtaining the recognized air picture (step 301) and assigning the threat levels (step 302) as described above, an avoidance trajectory for an avoidance recommendation message 191 is generated (step 311) and an avoidance trajectory for an automatic avoidance maneuver is generated (Step 312) as described in more detail below. Next, it is checked whether at least one object is assigned the threat level AA (decision 321). If this is the case, instructions 192 for an automatic avoidance maneuver are transmitted to the control system 160 (step 331). If this is not the case, it is checked whether at least one object is assigned the threat level RA (decision 322). If this is the case, an avoidance recommendation message 191 is issued (step 332). In any case, the recognized air picture will be regularly obtained, the threat levels and the avoidance trajectories will be updated and the threat levels will be checked in order to determine whether there is a need for action, i. e. the steps 301-322 will be carried out in a cyclic process.

When issuing an avoidance recommendation message 191, the Rules of the Air are incorporated in such a way that the pilot is advised to avoid a collision doing a right turn if an object is classified as "head on" or "being overtaken". In order to ensure that a collision is reliably avoided even in the case of a close approach between the object and the UAV, the Rules of the Air are not taken into account for the instructions 192 for automatic avoidance maneuvers.

For the generation of the avoidance trajectories (steps 311, 312), first a set of candidate trajectories is defined for the UAV for a defined prediction time. This set includes all trajectories, starting from the present position, speed, course and attitude of the UAV, with

- maintained present speed (temporary speed changes may occur while climbing or descending) or speed reduced to minimum speed;

- up to two changes of course (horizontal component), each quantized by 30° (0 / $\pm$30 / $\pm$60° with respect to the present course)

- up to one change of altitude (vertical component), quantized by $\pm$ 1000 ft with respect to the present altitude,

wherein the possible changes are commanded in predetermined temporal intervals starting from the present time

This leads to 2x5x5x3 = 150 candidate trajectories.

The speed of the UAV is reduced to minimum speed if the UAV is close to terrain. In order to save computational resources the 75 candidate trajectories with reduced speed may be selectively taken into account only if potential conflicts with terrain are relevant for the determination of the viable avoidance trajectories. Therefore, maintenance of the present speed is assumed until at least one of the candidate trajectories conflicts with terrain. In this case, the speed for the candidate avoidance trajectories is switched to minimum speed until none of the candidate trajectories conflicts with terrain. In this case, the speed for the candidate avoidance trajectories is switched back to the present speed. In this manner, in every time step only 75 candidate trajectories are taken into account.

The time up to the first change differs for candidate avoidance trajectories to be issued to the remote operator (resolution advisory) and for candidate avoidance trajectories to be provided to the flight controller. In the first case, the time up to the first change corresponds to the sum of the pilot reaction time and the link delay time, whereas in the second case, the time up to the first change is essentially 0.

The candidate trajectories of the UAV resulting from flight commands are calculated for a predefined time and used for the determination of the quality criterion, taking into account the flight characteristics of the UAV as well as external factors (such as wind). For that purpose, wind information is obtained from the on-boad navigation system. It has turned out that with larger UAVs a very simple wind model with constant direction and strength is usually sufficient. It is advisable to use more detailed wind models for smaller UAVs.

Further, for the determination of the quality criterion, the trajectories of all close traffic are calculated as well for the defined prediction time. These predicted trajectories for the traffic are based on their present position, speed, course, turn rate and altitude rate using a traffic model. The used model is based on a constant altitude rate and constant turn rate assumption.

In order to decide about the suitability of the candidate trajectories and to choose an avoidance trajectory for an avoidance recommendation or for automatic avoidance, a quality criterion (or compliance value) $J$ is determined for each of a plurality of trajectories. The quality criterion relates to terrain as well as to traffic avoidance, where terrain avoidance has priority over traffic avoidance. The quality criterion comprises three components, the first of which representing costs related to violation of the protection volume of terrain ($J_{TRN}$), the second of which representing costs related to traffic ($J_{TFC}$) , namely violation of the protection volume of traffic as well as altitude crossings, the third of which representing costs related to the commands ($J_{CMD}$) . The last component includes cost terms regarding changes of the commands as well as cost terms related to deviations of the commands from the reference values for the flight path used by the flight controller. These reference values may be provided by the remote operator or a higher level logic, in particular by an on-board system for commanding automatic maneuvers (such as "return home", etc.) e g. if the link to the base station is lost. The quality criterion is determined for specific points in time $dt_{perf}$, that can be a multiple of the sample time of the prediction. This value may be entered as a parameter.

The value of the terrain quality criterion $J_{TRN}$ relates to the certainty that the respective UAV trajectory does not fly into terrain, represented by a conservatively expanded digital terrain model (DTM). It is defined as follows:

$$J_{TRN} = \sum_{i=0}^{N_t} \begin{cases} 0, & \text{if } h_i^{UAV} - h_i^{DTM} \geq 0 \\ sw_{TRN}(h_i^{UAV} - h_i^{DTM})^2, & \text{if } h_i^{UAV} - h_i^{DTM} < 0 \end{cases}$$

where $i$ runs over discrete points in time, $N_t$ denotes the number of such points with trajectory data, $h_i^{UAV}$ is the altitude of the UAV trajectory at these points, $h_i^{DTM}$ is the altitude of the DTM at the position of these points, $sw_{TRN}$ is a switch taking the value of 1 if terrain avoidance shall be taken into account and 0 if this is not the case (e. g. failure handling, missing data).

The traffic quality criterion for a given trajectory relates to the certainty that the respective UAV trajectory does not collide with a collision volume of a traffic and to altitude crossings that should be avoided if possible. Thus, the value of the traffic quality criterion $J_{TFC}$ for a given trajectory is composed from a vertical component $f_{i,j}^{ver}$ and a horizontal component $f_{i,j}^{hor}$ defining a cost associated with the distance between the UAV and a traffic j at the time i, as well as a cost associated with altitude crossing if the trajectory of the UAV and traffic j cross in altitude:

$$J_{TFC} = \sum_{j=1}^{N_{TFC}} \left( \left( \sum_{i=0}^{N_t} (f_{i,j}^{ver} \cdot f_{i,j}^{hor}) \right) + \frac{k_j^{AltCross}}{d_j^{AltCross}} \right),$$

where $j$ runs over all traffic being taken into account, $N_{TFC}$ denotes the number of these traffic, $i$ runs over discrete points in time and $N_t$ denotes the number of such points with trajectory data. $k_j^{AltCross}$ is a constant penalty that takes a positive value if the candidate trajectory of the UAV would cross the altitude of the trajectory of traffic j and is zero otherwise. $d_j^{AltCross}$ is the horizontal distance between the UAV and the traffic j at their positions at the time when the altitude crossing occurs.

Certain trajectories may be flagged as impermissible from the outset, e. g. it may be prescribed for avoidance recommendation that a change of altitude is not allowed and/or that a left turn maneuver is in breach of Rules of the Air.

For the trajectories that are further considered, the vertical and the horizontal component functions are determined. The vertical component function $f_{i,j}^{ver}$ is a first penalty for small vertical distance relative to the traffic j at time i:

$$f_{i,j}^{ver} = \begin{cases} 0, & |h_i^{UAV} - h_{i,j}^{TFC}| \geq d^{ver,min} + \sigma_{i,j}^{ver} \\ k^{VerDist} \alpha_i (|h_i^{UAV} - h_{i,j}^{TFC}| - \sigma_{i,j}^{ver} - d^{ver,min})^2, & |h_i^{UAV} - h_{i,j}^{TFC}| < d^{ver,min} + \sigma_{i,j}^{ver} \end{cases}$$

where $d^{ver,min}$ is the desired minimal vertical distance, $\sigma_{i,j}^{ver}$ is the vertical uncertainty of both the predicted trajectory of the UAV and of traffic j at each time $i$, $h$ is the altitude of the respective aerial vehicle, $k^{VerDist}$ a constant weighting factor and $\alpha_i$ a weighting factor with decreasing value over time. The value $\alpha_i$ ensures that close encounters are prioritized over encounters later in time.

The horizontal component function $f_{i,j}^{hor}$ is a penalty for small horizontal distances relative to the traffic j at time i:

$$f_{i,j}^{hor} = \begin{cases} 0, & |p_i^{UAV} - p_{i,j}^{TFC}| \geq d^{hor,min} + \sigma_{i,j}^{hor} \\ k^{HorDist} \alpha_i (|p_i^{UAV} - p_{i,j}^{TFC}| - d^{hor,min} - \sigma_{i,j}^{hor})^2, & |p_i^{UAV} - p_{i,j}^{TFC}| < d^{hor,min} + \sigma_{i,j}^{hor} \end{cases}$$

where $d^{hor,min}$ is the desired minimal horizontal distance, $\sigma_{i,j}^{hor}$ the horizontal uncertainty of both the predicted trajectory of the UAV and traffic j at each time $i$, $p$ is the horizontal position of the respective aerial vehicle, $k^{HorDist}$ a constant weighting factor and $\alpha_i$ is again the weighting factor with decreasing value over time.

The value of the cost criterion $J_{CMD}$ related to commands is composed of cost related to changes of the commands $J_{CmdChange}$ and cost related to deviations of the commands relative to the commanded reference values for the flight path (provided by the remote operator or a higher level logic) used by the flight controller $J_{FcsDeviations}$:

$$J_{CMD} = J_{CmdChange} + J_{FcsDeviations}.$$

The cost related to changes of the commands $J_{CmdChange}$ is composed of the vertical altitude changes $\Delta h_k^{Cmd}$ at command change k and the horizontal course changes $\Delta crs_m^{Cmd}$ at command change m in the following manner:

$$J_{CmdChange} = \sum_{k=1}^{N_{AltChanges}} k^{AltCmd} \cdot (\Delta h_k^{Cmd})^2 + \sum_{m=1}^{N_{CrsChanges}} k^{CrsCmd} \cdot (\Delta crs_m^{Cmd})^2$$

where $k^{AltCmd}$ and $k^{CrsCmd}$ are weighting factors for the relevance of the respective change increase and $N_{AltChanges}$ and $N_{CrsChanges}$ are the number of changes in the vertical and horizontal component, respectively.

Due to the penalty term $J_{CmdChange}$ in the quality criterion avoidance trajectories are favoured that feature smaller (or no) changes in course or altitude. This applies for the trajectories that are chosen to be displayed as avoidance recommendations as well as to the trajectories that are provided to the control system 160 for automatic avoidance. Accordingly, if several avoidance trajectories are available in principle, the one will be chosen that is most similar to the present course and altitude. This minimizes the deviation of the avoidance trajectory from the present path and avoids seesaw-type avoidance trajectories, in cases where successive back and forth changes of altitude and/or course lead to minimum costs for terrain and/or traffic avoidance.

The cost related to deviations of the commands relative to the commanded reference values for the flight path used by the flight controller $J_{FcsDeviations}$ is composed of the altitude deviation and the course deviation in the following manner:

$$J_{FcsDeviations} = k^{AltFcsDev} \cdot (\Delta h^{Fcs})^2 + k^{CrsFcsDev} \cdot (\Delta crs^{Fcs})^2,$$

where $k^{AltFcsDev}$ and $k^{CrsFcsDev}$ are weighting factors for the relevance of the respective deviation, and $\Delta h^{Fcs}$ and $\Delta crs^{Fcs}$ are the differences between the respective reference values for the flight path for the flight controller and the command associated with the candidate trajectory. The different weights $k$ for the different turns may be used to tune the selection of avoidance trajectories.

Once all the quality criteria values have been calculated for all the remaining trajectories, the optimum shall be found. For that purpose, a linear search is applied to all quality criteria, looking for a "stepped" minimum, i. e. in a first step the terrain quality criterion $J_{TRN}$ is minimized. In a second step, all the trajectories having the same (minimal) value for the terrain quality criterion are searched for the one with the minimal value for the traffic quality criterion $J_{TFC}$. In a third step, all the trajectories having the same (minimal) value for the terrain and the traffic quality criterion are searched for the one with the minimal value for the command criterion $J_{CMD}$.

As long as there is a data link with the ground station 200, the operator (pilot) controls the flight path, including in particular parameters relating to the flight path (reference values) such as course, altitude, speed, etc. Corresponding control signals will be received by the communication module 180 and fed to the control system 160 as well as the processor 140.

Due to the penalty term $J_{FcsDeviations}$ in the quality criterion avoidance trajectories are favoured that are more similar to the reference values for the flight path (provided by the remote operator or a higher level logic) used by the flight controller. This applies for the trajectories that are chosen to be displayed as avoidance recommendations as well as to the trajectories that are provided to the control system 160 for automatic avoidance. Accordingly, if several avoidance trajectories are available in principle, the one will be chosen that is most similar to the reference values for the flight path used by the flight controller. Whereas, in case of automatic avoidance, the operator or a higher level logic temporarily loses the capability of directly controlling the control system 160 of the UAV, the commands will still be taken into account when determining the avoidance trajectories. Due to the fact that these trajectories are regularly updated, the operator's commands may affect the flight path even if an automatic avoidance maneuver is under way - provided there is a remaining degree of freedom with respect to safe avoidance trajectories.

Typically, in the context of an avoidance maneuver the available degrees of freedom are rather small when an automatic maneuver is commanded, but their number substantially increases after a short first phase. This means that the operator gradually gets back his or her control capabilities. In particular, this means that there is no need for waiting until an avoidance maneuver is completed and the control is handed back to the operator, but the operator may always try to modify the flight parameters as desired, e. g. to adapt the course to the present mission. The consequence is a transition between operator control and automatic control that is as smooth as possible.

In summary, it is to be noted that the invention creates a method to navigate a UAV that reliably avoids collisions even in complex situations.

**Claims**

1. A method to navigate an unmanned aerial vehicle (100), comprising the steps of

   a) controlling a flight path of the unmanned aerial vehicle (100) by a remote operator (5);
   b) obtaining a recognized air picture of an observation space surrounding the unmanned aerial vehicle (100), including tracking information with respect to aerial vehicles (10, 20, 30) within the observation space;
   c) assigning one of a plurality of threat levels to each of the aerial vehicles (10, 20, 30), the threat levels comprising a resolution advisory level and an automatic avoidance level;
   d) continuously automatically determining viable avoidance trajectories for the unmanned aerial vehicle (100);
   e) if at least one of the aerial vehicles (10, 20, 30) is assigned the resolution advisory level, providing a message to the remote operator (5) including a first proposed viable avoidance trajectory;
   f) if at least one of the aerial vehicles (10, 20, 30) is assigned the automatic avoidance level, providing control signals to an on-board flight controller (160) of the unmanned aerial vehicle (100) instructing the vehicle to follow a flight path corresponding to a second proposed viable avoidance trajectory.

2. The method as recited in claim 1, **characterized in that** for determining the viable avoidance trajectories a set of candidate avoidance trajectories generated according to a predetermined pattern are assessed with respect to collision avoidance and additional properties.

3. The method as recited in claim 2, **characterized in that** the set of candidate trajectories comprises trajectories starting at a current position and with a determined velocity including up to two changes of direction in a predetermined temporal offset and up to one change in altitude.

4. The method as recited in claim 2 or 3, **characterized in that** the additional properties include an avoidance of terrain.

5. The method as recited in claim 4, **characterized in that** in a first step the candidate avoidance trajectories are assessed with respect to the avoidance of terrain, excluding candidate trajectories that are inferior with respect to the avoidance of terrain, and that in a subsequent second step remaining candidate trajectories are assessed with respect to collision avoidance with other aerial vehicles.

6. The method as recited in claim 5, **characterized in that** in the second step a compliance value is evaluated for each of the remaining candidate trajectories, the compliance value including a term depending from a minimum distance of the UAV (100) navigated according to the respective candidate trajectory from the aerial vehicles (10, 20, 30) in the observation space.

7. The method as recited in any of claims 2 to 6, **characterized in that** the additional properties include a first similarity of a respective of the candidate avoidance trajectories with a trajectory of the UAV (100) commanded by the remote operator (5) or a higher level logic, wherein candidate trajectories having a high first similarity are favored over candidate trajectories having a lower first similarity.

8. The method as recited in claim 6 and claim 7, **characterized in that** the compliance value includes an additional term depending from the first similarity.

9. The method as recited in any of claims 2 to 8, **characterized in that** the additional properties include a second similarity of a respective of the candidate avoidance trajectories with a trajectory of the UAV (100) according to present control signals provided to the flight controller (160), wherein candidate trajectories having a high second similarity are favored over candidate trajectories having a lower second similarity.

10. The method as recited in claim 6 and claim 9, **characterized in that** the compliance value includes an additional term depending from the second similarity.

11. The method as recited in any of claims 1 to 10, **characterized in that** at least some of the aerial vehicles (10, 20, 30) in the observation space are classified according to a relative geometry of a respective track of the aerial vehicle (10, 20, 30) and a flight path of the UAV (100), wherein possible classes include traffic approach is head on and traffic is being overtaken.

12. The method as recited in claim 2 and claim 11, **characterized in that** the additional properties include a compliance of a respective candidate trajectory with Rules of the Air.

13. The method as recited in claim 12, **characterized in that** for the determination of the first proposed viable avoidance trajectory the additional properties include the compliance of a respective candidate trajectory with Rules of the Air and **in that** for the determination of the second proposed viable avoidance trajectory the additional properties do not include the compliance of a respective candidate trajectory with Rules of the Air.

14. A UAV (100), comprising

a) a communication interface (180) adapted to receive reference values from a remote operator (5) and to provide control signals based on the reference values;
b) a flight controller (160) for controlling the flight path of the UAV (100), wherein the flight controller (160) is adapted to receive the control signals and to control the flight path based on the received control signals;
c) environment sensors (111, 112, 113, 105) providing signals relating to an observation space surrounding the UAV (100);
d) a first processor (150) adapted to receive and process the signals provided by the environment sensors to obtain a recognized air picture of the observation space, including tracking information with respect to aerial vehicles within the observation space;
e) a second processor (151) adapted to assign one of a plurality of threat levels to each of the aerial vehicles, the threat levels comprising a resolution advisory level and an automatic avoidance level; and
f) a third processor (152) adapted to continuously automatically determine viable avoidance trajectories for the UAV;

wherein the third processor (152) is controlled to:

- provide a message to the remote operator (5) including a first proposed viable avoidance trajectory if at least one of the aerial vehicles (10, 20, 30) is assigned the resolution advisory level; and
- provide control signals to the flight controller (160) instructing the vehicle (100) to follow a flight path corresponding to a second proposed viable avoidance trajectory, if at least one of the aerial vehicles (10, 20, 30) is assigned the automatic avoidance level.

**Patentansprüche**

1. Verfahren zum Navigieren eines unbemannten Luftfahrzeugs (100), das die folgenden Schritte umfasst:

a) Steuerung einer Flugbahn des unbemannten Luftfahrzeugs (100) durch einen entfernten Bediener (5);
b) Erhalten eines erkannten Luftlagebildes eines das unbemannte Luftfahrzeug (100) umgebenden Beobachtungsraums, einschließlich Verfolgungsinformationen in Bezug auf Luftfahrzeuge (10, 20, 30) innerhalb des Beobachtungsraums;
c) Zuordnen einer von mehreren Bedrohungsstufen zu jedem der Luftfahrzeuge (10, 20, 30), wobei die Bedrohungsstufen eine Auflösungsberatungsstufe und eine automatische Ausweichstufe umfassen;
d) kontinuierliche automatische Bestimmung von praktikablen Ausweichflugbahnen für das unbemannte Luftfahrzeug (100);

e) wenn mindestens einem der Luftfahrzeuge (10, 20, 30) die Auflösungsberatungsstufe zugewiesen ist, Übermittlung einer Nachricht an den entfernten Bediener (5), die eine erste vorgeschlagene praktikable Ausweichflugbahn enthält;

f) wenn mindestens einem der Luftfahrzeuge (10, 20, 30) die automatische Ausweichstufe zugewiesen ist, Bereitstellen von Steuersignalen an eine bordseitige Flugsteuerung (160) des unbemannten Luftfahrzeugs (100), die das Fahrzeug anweist, einem Flugweg zu folgen, der einer zweiten vorgeschlagenen praktikablen Ausweichflugbahn entspricht.

2. Verfahren nach Anspruch 1, **dadurch gekennzeichnet, dass** zur Bestimmung der praktikablen Ausweichflugbahnen ein Satz von in Frage kommenden Ausweichflugbahnen, die nach einem vorgegebenen Muster erzeugt wurden, hinsichtlich der Kollisionsvermeidung und zusätzlicher Eigenschaften bewertet wird.

3. Verfahren nach Anspruch 2, **dadurch gekennzeichnet, dass** der Satz der in Frage kommenden Flugbahnen Flugbahnen umfasst, die an einer aktuellen Position und mit einer bestimmten Geschwindigkeit beginnen und bis zu zwei Richtungsänderungen in einem vorgegebenen zeitlichen Versatz und bis zu einer Höhenänderung umfassen.

4. Verfahren nach Anspruch 2 oder 3, **dadurch gekennzeichnet, dass** die zusätzlichen Eigenschaften eine Vermeidung von Gelände einschließen.

5. Verfahren nach Anspruch 4, **dadurch gekennzeichnet, dass** in einem ersten Schritt die in Frage kommenden Ausweichflugbahnen im Hinblick auf die Vermeidung von Gelände bewertet werden, wobei in Frage kommende Flugbahnen, die im Hinblick auf die Vermeidung von Gelände minderwertig sind, ausgeschlossen werden, und dass in einem anschließenden zweiten Schritt die verbleibenden in Frage kommenden Flugbahnen im Hinblick auf die Vermeidung von Kollisionen mit anderen Luftfahrzeugen bewertet werden.

6. Verfahren nach Anspruch 5, **dadurch gekennzeichnet, dass** im zweiten Schritt ein Übereinstimmungswert fürjede der verbleibenden in Frage kommenden Flugbahnen ausgewertet wird, wobei der Übereinstimmungswert einen Term enthält, der von einem Mindestabstand des gemäß der jeweiligen in Frage kommenden Flugbahn navigierten unbemannten Luftfahrzeugs (100) von den Luftfahrzeugen (10, 20, 30) im Beobachtungsraum abhängt.

7. Verfahren nach einem der Ansprüche 2 bis 6, **dadurch gekennzeichnet, dass** die zusätzlichen Eigenschaften eine erste Ähnlichkeit einer jeweiligen der in Frage kommenden Ausweichflugbahnen mit einer Flugbahn des unbemannten Luftfahrzeugs (100) umfassen, die von dem ferngesteuerten Bediener (5) oder einer Logik höherer Ebene befohlen wird, wobei in Frage kommende Flugbahnen mit einer hohen ersten Ähnlichkeit gegenüber in Frage kommenden Flugbahnen mit einer niedrigeren ersten Ähnlichkeit bevorzugt werden.

8. Verfahren nach Anspruch 6 und Anspruch 7, **dadurch gekennzeichnet, dass** der Übereinstimmungswert einen zusätzlichen Term enthält, der von der ersten Ähnlichkeit abhängt.

9. Verfahren nach einem der Ansprüche 2 bis 8, **dadurch gekennzeichnet, dass** die zusätzlichen Eigenschaften eine zweite Ähnlichkeit einer jeweiligen der in Frage kommenden Ausweichflugbahnen mit einer Flugbahn des unbemannten Luftfahrzeugs (100) gemäß den vorliegenden Steuersignalen umfassen, die der Flugsteuerung (160) zugeführt werden, wobei in Frage kommende Flugbahnen mit einer hohen zweiten Ähnlichkeit gegenüber in Frage kommenden Flugbahnen mit einer niedrigeren zweiten Ähnlichkeit bevorzugt werden.

10. Verfahren nach Anspruch 6 und Anspruch 9, **dadurch gekennzeichnet, dass** der Übereinstimmungswert einen zusätzlichen Term enthält, der von der zweiten Ähnlichkeit abhängt.

11. Verfahren nach einem der Ansprüche 1 bis 10, **dadurch gekennzeichnet, dass** zumindest einige der Luftfahrzeuge (10, 20, 30) im Beobachtungsraum gemäß einer relativen Geometrie einer jeweiligen Spur des Luftfahrzeugs (10, 20, 30) und einer Flugbahn des unbemannten Luftfahrzeugs (100) klassifiziert werden, wobei zu den möglichen Klassen eine Annäherung im Gegenverkehr und ein Überholvorgang gehören.

12. Verfahren nach Anspruch 2 und Anspruch 11, **dadurch gekennzeichnet, dass** die zusätzlichen Eigenschaften eine Übereinstimmung einer jeweiligen in Frage kommenden Flugbahn mit den Luftverkehrsregeln umfassen.

13. Verfahren nach Anspruch 12, **dadurch gekennzeichnet, dass** für die Bestimmung der ersten vorgeschlagenen praktikablen Ausweichflugbahn die zusätzlichen Eigenschaften die Übereinstimmung einer jeweiligen in Frage kommenden Ausweichflugbahn mit den Luftverkehrsregeln einschließen und dass für die Bestimmung der zweiten vorgeschlagenen praktikablen Ausweichflugbahn die zusätzlichen Eigenschaften nicht die Übereinstimmung einer jeweiligen in Frage kommenden Flugbahn mit den Luftverkehrsregeln einschließen.

**14.** Ein unbemanntes Luftfahrzeug (100), umfassend

a) eine Kommunikationsschnittstelle (180), die geeignet ist, Referenzwerte von einem entfernten Bediener (5) zu empfangen und Steuersignale auf der Grundlage der Referenzwerte zu liefern;
b) eine Flugsteuerung (160) zum Steuern der Flugbahn des unbemannten Luftfahrzeugs (100), wobei die Flugsteuerung (160) dazu ausgelegt ist, die Steuersignale zu empfangen und die Flugbahn basierend auf den empfangenen Steuersignalen zu steuern;
c) Umgebungssensoren (111, 112, 113, 105), die Signale in Bezug auf einen das unbemannte Luftfahrzeug (100) umgebenden Beobachtungsraum liefern;
d) einen ersten Prozessor (150), der so beschaffen ist, dass er die von den Umgebungssensoren gelieferten Signale empfängt und verarbeitet, um ein erkanntes Luftlagebild des Beobachtungsraums zu erhalten, einschließlich Verfolgungsinformationen in Bezug auf Luftfahrzeuge innerhalb des Beobachtungsraums;
e) einen zweiten Prozessor (151), der so beschaffen ist, dass er jedem der Luftfahrzeuge eine aus einer Mehrzahl von Bedrohungsstufen zuweist, wobei die Bedrohungsstufen eine Auflösungsberatungsstufe und eine automatische Ausweichstufe umfassen; und
f) einen dritten Prozessor (152), der geeignet ist, kontinuierlich automatisch praktikable Ausweichflugbahnen für das unbemannte Luftfahrzeug zu bestimmen;

wobei der dritte Prozessor (152) gesteuert wird, um:

- eine Nachricht an den entfernten Bediener (5) mit einem ersten Vorschlag für eine praktikable Ausweichflugbahn zu übermitteln, wenn mindestens einem der Luftfahrzeuge (10, 20, 30) die Auflösungsberatungsstufe zugewiesen ist; und
- Steuersignalen für die Flugsteuerung (160) bereitzustellen, die das Fahrzeug (100) anweisen, einem Flugweg zu folgen, der einer zweiten vorgeschlagenen Ausweichflugbahn entspricht, wenn mindestens einem der Luftfahrzeuge (10, 20, 30) die automatische Ausweichstufe zugewiesen ist.

## Revendications

**1.** Procédé de navigation d'un véhicule aérien sans pilote (100), comprenant les étapes consistant à :

a) contrôler une trajectoire de vol du véhicule aérien sans pilote (100) par un opérateur distant (5) ;
b) obtenir une image aérienne reconnue d'un espace d'observation entourant le véhicule aérien sans pilote (100), comprenant des informations de suivi relatives aux véhicules aériens (10, 20, 30) dans l'espace d'observation ;
c) attribuer un niveau de menace parmi une pluralité de niveaux de menace à chacun des véhicules aériens (10, 20, 30), les niveaux de menace comprenant un niveau de conseil de résolution et un niveau d'évitement automatique ;
d) déterminer automatiquement en continu des trajectoires d'évitement viables pour le véhicule aérien sans pilote (100) ;
e) si au moins un des véhicules aériens (10, 20, 30) se voit attribuer le niveau de conseil de résolution, fournir un message à l'opérateur distant (5) comprenant une première trajectoire d'évitement viable proposée ;
f) si au moins un des véhicules aériens (10, 20, 30) est affecté du niveau d'évitement automatique, fournir des signaux de commande à un contrôleur de vol embarqué (160) du véhicule aérien sans pilote (100) ordonnant au véhicule de suivre une trajectoire de vol correspondant à une deuxième trajectoire d'évitement viable proposée.

**2.** Procédé selon la revendication 1, **caractérisé en ce que** pour déterminer les trajectoires d'évitement viables, un ensemble de trajectoires d'évitement candidates générées selon un modèle prédéterminé sont évaluées en ce qui concerne l'évitement de collision et des propriétés supplémentaires.

**3.** Procédé selon la revendication 2, **caractérisé en ce que** l'ensemble de trajectoires candidates comprend des trajectoires commençant à une position actuelle et avec une vitesse déterminée comprenant jusqu'à deux changements de direction dans un décalage temporel prédéterminé et jusqu'à un changement d'altitude.

4. Procédé selon la revendication 2 ou 3, **caractérisé en ce que** les propriétés supplémentaires comprennent un évitement de terrain.

5. Procédé selon la revendication 4, **caractérisé en ce que** dans une première étape, les trajectoires d'évitement candidates sont évaluées par rapport à l'évitement du terrain, à l'exclusion des trajectoires candidates qui sont inférieures par rapport à l'évitement du terrain, et **en ce que** dans une deuxième étape ultérieure, les trajectoires candidates restantes sont évaluées par rapport à l'évitement de collision avec d'autres véhicules aériens.

6. Procédé selon la revendication 5, **caractérisé en ce que** dans la deuxième étape, une valeur de conformité est évaluée pour chacune des trajectoires candidates restantes, la valeur de conformité comprenant un terme dépendant d'une distance minimale du drone (100) navigué selon la trajectoire candidate respective par rapport aux véhicules aériens (10, 20, 30) dans l'espace d'observation.

7. Procédé selon une quelconque des revendications 2 à 6, **caractérisé en ce que** les propriétés supplémentaires comprennent une première similarité d'une trajectoire d'évitement candidate respective avec une trajectoire du drone (100) commandée par l'opérateur distant (5) ou une logique de niveau supérieur, dans lequel les trajectoires candidates ayant une première similarité élevée sont privilégiées par rapport aux trajectoires candidates ayant une première similarité inférieure.

8. Procédé selon la revendication 6 et la revendication 7, **caractérisé en ce que** la valeur de conformité comprend un terme supplémentaire dépendant de la première similarité.

9. Procédé selon une quelconque des revendications 2 à 8, **caractérisé en ce que** les propriétés supplémentaires comprennent une deuxième similarité d'une trajectoire d'évitement candidate respective avec une trajectoire du drone (100) selon les signaux de commande actuels fournis au contrôleur de vol (160), dans lequel les trajectoires candidates ayant une deuxième similarité élevée sont privilégiées par rapport aux trajectoires candidates ayant une deuxième similarité inférieure.

10. Procédé selon la revendication 6 et la revendication 9, **caractérisé en ce que** la valeur de conformité comprend un terme supplémentaire dépendant de la deuxième similarité.

11. Procédé selon une quelconque des revendications 1 à 10, **caractérisé en ce qu'**au moins certains des véhicules aériens (10, 20, 30) dans l'espace d'observation sont classés selon une géométrie relative d'une trajectoire respective du véhicule aérien (10, 20, 30) et d'une trajectoire de vol du drone (100), dans lequel des classes possibles comprennent l'approche du trafic de face et le dépassement du trafic.

12. Procédé selon la revendication 2 et la revendication 11, **caractérisé en ce que** les propriétés supplémentaires comprennent une conformité d'une trajectoire candidate respective avec la règlementation de la circulation aérienne.

13. Procédé selon la revendication 12, **caractérisé en ce que** pour la détermination de la première trajectoire d'évitement viable proposée, les propriétés supplémentaires comprennent la conformité d'une trajectoire candidate respective avec la règlementation de la circulation aérienne et **en ce que** pour la détermination de la deuxième trajectoire d'évitement viable proposée, les propriétés supplémentaires ne comprennent pas la conformité d'une trajectoire candidate respective avec la règlementation de la circulation aérienne.

14. Drone (100), comprenant

   a) une interface de communication (180) adaptée pour recevoir des valeurs de référence d'un opérateur distant (5) et pour fournir des signaux de commande basés sur les valeurs de référence ;
   b) un contrôleur de vol (160) pour contrôler la trajectoire de vol du drone (100), le contrôleur de vol (160) étant adapté pour recevoir les signaux de commande et pour contrôler la trajectoire de vol en fonction des signaux de commande reçus ;
   c) des capteurs d'environnement (111, 112, 113, 105) fournissant des signaux relatifs à un espace d'observation entourant le drone (100) ;
   d) un premier processeur (150) adapté pour recevoir et traiter les signaux fournis par les capteurs d'environnement afin d'obtenir une image aérienne reconnue de l'espace d'observation, comprenant des informations

EP 3 975 157 B1

de suivi relatives aux véhicules aériens dans l'espace d'observation ;

e) un deuxième processeur (151) adapté pour attribuer un d'une pluralité de niveaux de menace à chacun des véhicules aériens, les niveaux de menace comprenant un niveau de conseil de résolution et un niveau d'évitement automatique ; et

f) un troisième processeur (152) adapté pour déterminer automatiquement en continu des trajectoires d'évitement viables pour le drone ;

dans lequel le troisième processeur (152) est commandé pour :

- fournir un message à l'opérateur distant (5) comprenant une première trajectoire d'évitement viable proposée si au moins un des véhicules aériens (10, 20, 30) se voit attribuer le niveau de conseil de résolution ; et
- fournir des signaux de commande au contrôleur de vol (160) ordonnant au véhicule (100) de suivre une trajectoire de vol correspondant à une deuxième trajectoire d'évitement viable proposée, si au moins un des véhicules aériens (10, 20, 30) se voit attribuer le niveau d'évitement automatique.

**Fig. 1**

**Fig. 2**

**Fig. 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2187371 B1
- GB 2450987 B
- EP 3640921 A1

**Non-patent literature cited in the description**

- **Y. BAR-SHALOM ; P. K. WILLETT ; X. TIAN.** Tracking and Data Fusion - A Handbook of Algorithms. 2011
- **M. FU.** Lack of Separation Principle for Quantized Linear Quadratic Gaussian Control. *IEEE Transactions on Automatic Control,* September 2012, vol. 57 (9